# EUROPÄISCHE PATENTSCHRIFT

(11) **EP 0 451 606 B1**
(45) Veröffentlichungstag und Bekanntmachung des Hinweises auf die Patenterteilung: **03.05.1995**
(21) Anmeldenummer: 91104748.8
(22) Anmeldetag: 26.03.1991
(51) Int. Cl.: B60J 7/08

(54) **Fahrzeugdach, insbesondere für Schwerkraftfahrzeuge, Busse o.dgl.**
Vehicle roof, especially for lorries or busses
Toit de véhicule, notamment pour poids lourds ou autobus

(30) Priorität: 12.04.1990 DE 4011902
(43) Veröffentlichungstag der Anmeldung: 16.10.1991
(73) Patentinhaber: Webasto AG Fahrzeugtechnik, D-82131 Stockdorf (DE)
(72) Erfinder: Poppele, Gebhard, W-8000 München 50 (DE); Prem, Bernhard, W-8000 München 70 (DE)
(74) Vertreter: Wiese, Gerhard

(56) Entgegenhaltungen:
- EP-A- 0 019 024
- EP-A- 0 094 257
- DE-A- 3 835 018
- GB-A- 1 581 878

## Beschreibung

Die Erfindung befaßt sich mit einem Fahrzeugdach, das insbesondere für Schwerkraftfahrzeuge, Busse o.dgl. bestimmt ist.

Aus DE-A-3 835 018 ist ein Fahrzeugdach der vorstehend genannten Art entnehmbar, bei dem in einer festen Dachfläche eine Dachöffnung vorgesehen ist, in die ein Rahmen einsetzbar ist. Mittels eines Deckels ist die Dachöffnung verschließbar. Der Deckel ist um zwei quer zur Fahrzeuglängsachse verlaufende Achsen über eine Schwenklagerung und eine Ausstelleinrichtung bezüglich des in die Dachöffnung eingesetzten Rahmens ausstellbar. Ferner ist eine Notentriegelungseinrichtung vorgesehen, welche zur Bildung einer Notausstiegsluke eine Trennung von Deckel und fahrzeugfestem Rahmen erlaubt. Im Notfall soll hierbei mit möglichst geringem Kraftaufwand und bei verminderter Verletzungsgefahr ein möglichst großer Öffnungsbereich als Notausstiegsluke bereitgestellt werden. Hierzu wird die Betätigungsmechanik in einem Längsträger untergebracht, der sich in Richtung der Fahrzeuglängsachse erstreckt. Diese Betätigungsmechanik trägt den Deckel und dient zur Ausführung einer Ausstellbewegung. Zugleich dient der Längsträger zur lösbaren Halterung des Deckels und der Betätigungsmechanik am Dachrahmen. Im Notfalle wird hierbei der Längsträger zusammen mit der Betätigungsmechanik vom Rahmen getrennt, so daß ein großer Notausstiegslukenbereich vorhanden ist, der durch den Rahmen vorgegeben ist und darüber hinaus wird die Betätigungsmechanik zusammen mit dem Deckel im Notfall ausgeworfen. Zur Notbetätigung müssen entsprechende Verriegelungseinrichtungen von Längsträger und Rahmen gelöst werden, welche an beiden, gegenüberliegenden Schwenklagerbereichen vorgesehen sind, wodurch sich im Notfalle die Schritte zur Notentriegelung verkomplizieren^{.}

Die Erfindung zielt daher darauf ab, unter Überwindung der zuvor geschilderten Schwierigkeiten, ein Fahrzeugdach, insbesondere für Schwerkraftfahrzeuge, Busse o.dgl., bereitzustellen, bei welchem eine wesentlich vereinfachte Notbetätigung sowohl von innen als auch von außen ohne eine Verkomplizierung der gesamten Fahrzeugdachkonstruktion ermöglicht wird.

Nach der Erfindung zeichnet sich ein Fahrzeugdach, insbesondere für Schwerkraftfahrzeuge, Busse o.dgl., mit einer an einer festen Dachfläche vorgesehenen Dachöffnung, welche mittels eines Deckels verschließbar ist, der um zwei quer zur Fahrzeuglängsachse verlaufende Achsen über eine Schwenklagerung und eine Ausstelleinrichtung bezüglich eines in die Dachöffnung eingesetzten Rahmens ausstellbar ist, und mit einer Notentriegelungseinrichtung, welche zur Bildung einer Notausstiegsluke eine Trennung von Deckel und fahrzeugfestem Rahmen erlaubt, dadurch aus, daß die Notentriegelungseinrichtung den Deckel von dem Rahmen im Bereich beider Schwenklagerungen über eine gemeinsame Betätigungseinrichtung trennt, welche vom Fahrzeuginnenraum oder von außen betätigbar ist. Beim erfindungsgemäßen Fahrzeugdach wird somit der Vorgang zur Notentriegelung dadurch wesentlich vereinfacht, daß man nur eine gemeinsame Betätigungseinrichtung für die Notentriegelungseinrichtung am Fahrzeugdach hat, welche sowohl von innen als auch von außen im Notfall betätigbar ist. Hierdurch ist es möglich, daß im Notfalle, wie bei Brand im Innenraum oder bei Unfällen, schnell von außen oder innen eine Notausstiegsluke geöffnet werden kann, über die die Fahrzeuginsassen das Fahrzeug verlassen können oder Hilfeleistung von außen erbracht werden kann. Durch diese vereinfachte Notentriegelung kann man gewährleisten, daß auch bei Ausbruch einer Panik eine schnelle und zuverlässige Öffnung des Fahrzeugdachbereiches möglich ist.

Gemäß einer vorteilhaften Ausgestaltungsform nach der Erfindung ist die Notentriegelungseinrichtung in der Nähe einer der Schwenklagerungen angeordnet, und die Trennung an der jeweils anderen Schwenklagerung erfolgt über eine im Rahmen geführte Mitnahmeeinrichtung. Als Mitnahmeeinrichtung kann ein Seilzug oder ein Bowdenzug beispielsweise verwendet werden, welche im Dachrahmen geführt sind und eine Bewegungsübertragung von der Betätigungseinrichtung der Notentriegelungseinrichtung zu der Trennung im Bereich der jeweils anderen Schwenklagerung gestattet. Somit kann mit einem Handgriff die Notentriegelung von innen oder von außen vorgenommen werden.

Um eine Einstiegsmöglichkeit in den Fahrzeuginnenraum ohne Notfall beispielsweise über die Außenbetätigung der Notentriegelungseinrichtung zu verhindern, ist der gemeinsamen Betätigungseinrichtung eine Diebstahlsicherung zugeordnet, welche von einer zusätzlichen Verriegelungseinrichtung gebildet werden kann. Zweckmäßigerweise ist diese Verriegelungseinrichtung, welche als Diebstahlsicherung dient, mit einer Zentralverriegelungsanlage für das Fahrzeug koppelbar, so daß beim Abschließen des Fahrzeugs und beim Abstellen desselben automatisch die Verriegelungseinrichtung der Diebstahlsicherung eingeklinkt ist und keine Öffnung der Notausstiegsluke möglich ist. Wenn das Fahrzeug hingegen fährt, ist diese Zentralverriegelungsanlage entriegelt, so daß dann die Betätigungseinrichtung für die Notentriegelungseinrichtung ohne zusätzliche Entriegelung der Diebstahlsicherung jederzeit sofort in Betrieb genommen werden kann.

Bei einer ersten bevorzugten Ausführungsform nach der Erfindung trennt die Notentriegelungseinrichtung die Schwenklagerung insgesamt zusammen mit der Ausstelleinrichtung vom Rahmen. Hierzu ist die Schwenklagerung über einen Lagerbock am Rahmen gehalten und im Rahmen ist ein Halter verschieblich geführt, in dem der Lagerbock lösbar festgelegt ist. Der Lagerbock kann hierbei Rastzapfen haben, welche in Aufnahmeöffnungen des Halters eingreifen, und mit dem Halter arbeitet ein Betätigungshebel als Notentriegelungseinrichtung über eine Verzahnung zusammen, wobei die Auslegung derart getroffen ist, daß bei einer Drehbewegung des Betätigungshebels der Halter in Längsrichtung in seine Lösestellung verfahren wird. Bei dieser Ausgestaltungsform der Notentriegelungseinrichtung für ein Fahrzeugdach ist über die Zahnradkoppelung von Betätigungshebel und Halter für den Lagerbock der Schwenklagerung eine einen geringen Kraftaufwand erforderliche Notbetätigung möglich, wobei die gesamte Ausstelleinrichtung mit den zugeordneten Lagerungen mit dem Deckel ausgeworfen werden kann.

Vorzugsweise wird der Halter der jeweils anderen und gegenüberliegenden Schwenklagerung über ein um Umlenkrollen im Rahmen geführtes Zugseil mitgenommen, so daß sich die Lagerung an dem Rahmen in übereinstimmender Weise gestalten lassen, aber nur eine einzige Betätigungseinrichtung erforderlich ist, um beide Schwenklagerungen vom Rahmen zu trennen.

Bei einer anderen bevorzugten Ausführungsform des Fahrzeugdachs nach der Erfindung trennt die Notentriegelungseinrichtung die Schwenklagerung am Rahmen. Hierbei erfolgt somit eine Auftrennung im Notfalle direkt im Schwenklagerbereich am Rahmen, wozu vorzugsweise zugeordnete Stifte, welche vorzugsweise die Lagerbolzen der Schwenklagerung bilden, vorgesehen sind, welche mittels einer gemeinsamen Betätigungshandhabe in eine Entriegelungsstellung bringbar sind. Bei dieser Ausgestaltungsform werden somit vorzugsweise die Lagerbolzen beider Schwenklagerungen außer Eingriff von den zugeordneten Lagerstellen am Rahmen gebracht, so daß zur Notentriegelung keine zusätzlichen und gesonderten Bauteile für die Schwenklagerungen erforderlich sind.

Als Betätigungshandhabe ist vorzugsweise ein L-förmig ausgebildter Hebel vorgesehen, der um eine etwa horizontale Achse, d.h. eine in der Dachebene des Fahrzeugdachs liegende Achse, schwenkbar ist. An diesem Hebel ist eine Nockeneinrichtung vorgesehen, welche mit den Stiften bzw. Lagerbolzen der Schwenklagerung vorzugsweise derart zusammenarbeitet, daß die Stifte bzw. Lagerbolzen der Schwenklagerung eine Längsverschiebung ausführen und aus den zugeordneten Aufnahmeöffnungen am Rahmen in die Entriegelungsstellung linear verschiebbar sind. Hierdurch wird erreicht, daß zur Notentriegelung möglichst kurze Betätigungswege der zugeordneten und zu lösenden Teile vorhanden sind, um eine möglichst rasche Freigabe der Notausstiegsluke zu ermöglichen.

Die Stifte bzw. Lagerbolzen der jeweils anderen Schwenklagerung werden über einen Zug als Bewegungsverbindung der Stifte bzw. Bolzen der ersten Schwenklagerung mitgenommen und mitgeführt. Somit erfolgt die Trennung an der jeweils anderen Schwenklagerung im wesentlichen gleichzeitig mit der Trennung der Schwenklagerung, in deren Bereich die Notentriegelungseinrichtung und die Betätigungshandhabe hierfür vorgesehen sind. Hierbei kann einerseits die Auslegung derart getroffen werden, daß die auf einer Seite, bezogen auf die Fahrzeuglängsachse liegenden Stifte bzw. Lagerbolzen der Schwenklagerung, jeweils eine Bewegungseinheit bilden, so daß zwei Zugelemente vorgesehen sind, die die jeweils gegenüberliegenden Stifte bzw. Lagerbolzen mitnehmen. Hierdurch lassen sich die Bewegungswege verkürzen und die Mitnahmeeinrichtung braucht nicht in einem geschlossenen Kreis zur Notentriegelungseinrichtung geführt zu werden.

Als Nockeneinrichtung ist vorzugsweise eine Nocke vorgesehen, die in eine Vertiefung des jeweiligen Stifts bzw. Lagerbolzens eingreift. Diese Nocke ist drehbar an der Schwenkachse des L-förmigen Hebels zusammen mit diesem gelagert, und derart profiliert, daß sie mit einer Vertiefung an dem Lagerbolzen zusammenarbeitet. Hierzu kann die Nocke eine Anlaufschräge an der Eingriffsseite zum Zusammenarbeiten mit der Vertiefung haben und erstreckt sich dann in axialer Richtung über den Umfang der Nocke hinweg zur gegenüberliegenden Außenwand derselben. Bei einer Drehbewegung der Nocke und der Nockeneinrichtung bei der Betätigung und Beaufschlagung des Hebels werden somit die zugeordneten Lagerbolzen linear bezüglich des Rahmens verschoben.

Vorzugsweise ist der Hebel der Betätigungshandhabe einteilig ausgelegt, wobei ein Hebelende bei Innenbetätigung und das andere bei Außenbetätigung beaufschlagt wird. Hierdurch vereinfacht sich die Notentriegelungseinrichtung, da man keine gesonderten Betätigungshandhaben für die beiden Auslösemöglichkeiten von innen und außen benötigt.

Bei einer ersten bevorzugten Ausführungsform wird zur Notentriegelung der Hebel sowohl von innen als auch von außen durch die Zugkraft beaufschlagt. Gemäß einer alternativen Ausführungsform können der Hebel und die Lagerung desselben derart ausgelegt werden, daß man bei beiden Notauslösemöglichkeiten eine Druckkraft auf den Hebel aufbringen muß. Somit kann bei der erfindungsgemäßen Notentriegelungseinrichtung für ein Fahrzeugdach die jeweils gewünschte und einfachere Notauslösungsbedienungsweise gewählt werden.

Die Erfindung wird nachstehend anhand von bevorzugten Ausführungsformen unter Bezugnahme auf die beigefügte Zeichnung näher erläutert. Darin zeigt:
- Fig. 1: eine perspektivische Ansicht einer ersten Ausführungsform eines erfindungsgemäßen Fahrzeugdaches, wobei der Deckel in seiner vom Rahmen getrennten Stellung gezeigt ist,
- Fig. 2a und 2b: jeweils eine Seitenansicht und eine Draufsicht auf die Nockeneinrichtung der Notbetätigungseinrichtung zur Verdeutlichung des Zusammenwirkens mit einem Stift oder Lagerbolzen an der Schwenklagerung,
- Fig. 3: eine schematische Ansicht einer Diebstahlsicherung für das Fahrzeugdach,
- Fig. 4: eine schematische perspektivische Ansicht einer zweiten bevorzugten Ausführungsform eines Fahrzeugdachs nach der Erfindung, bei welchem die Lagerböcke der Schwenklagerungen vom Rahmen bei der Notentriegelung getrennt werden, und
- Fig. 5: eine perspektivische Ausschnittsansicht zur Verdeutlichung einer Notentriegelungseinrichtung, bei der die Betätigungshandhabe von innen und außen durch eine Zugkraft beaufschlagbar ist.

In den Figuren der Zeichnungen sind gleiche oder ähnliche Teile mit denselben Bezugszeichen versehen.

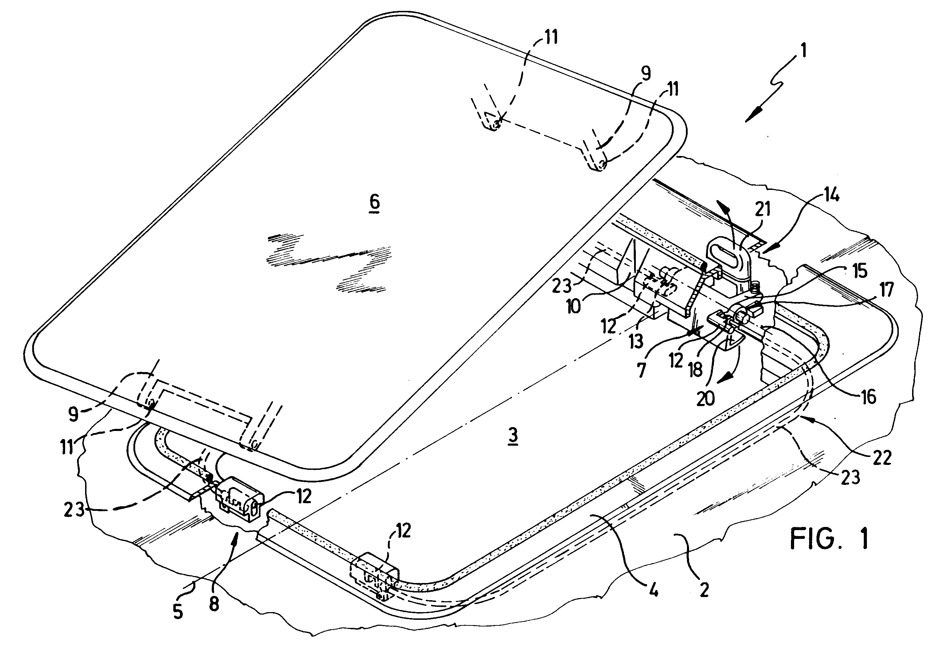

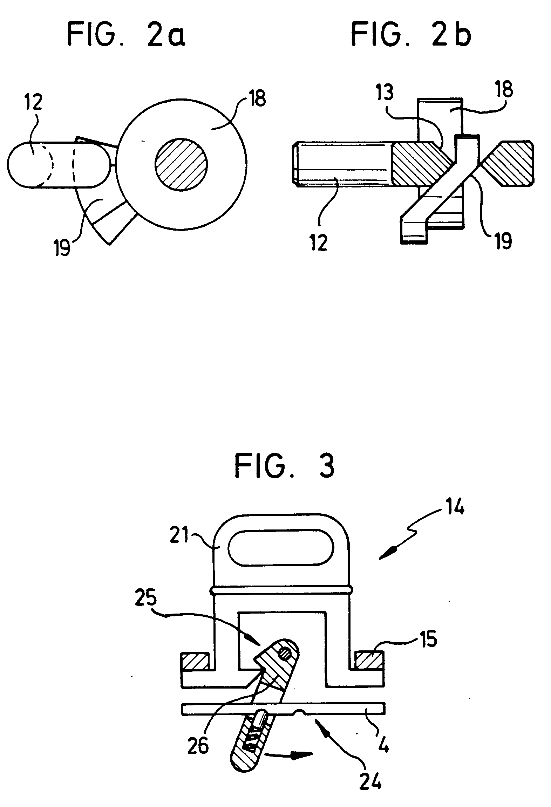

Anhand den Fig. 1 und 2a und 2b wird eine erste Ausführungsform eines insgesamt mit 1 bezeichneten Fahrzeugdachs erläutert. In einer festen Dachfläche 2 eines nicht näher dargestellten Schwerkraftfahrzeugs, wie eines Busses o.dgl., ist eine Dachöffnung 3 vorgesehen, in die ein Rahmen 4 eingesetzt ist. Die Fahrzeuglängsachse ist mit 5 bezeichnet und in einer strichpunktierten Linie dargestellt. Die Dachöffnung 3 ist durch einen Deckel 6 verschließbar, der an seinen beiden gegenüberliegenden Enden über je eine Schwenklagerung 7, 8 schwenkbeweglich am Rahmen 4 gelagert ist. Mit Hilfe einer nicht näher dargestellten Ausstelleinrichtung kann der Deckel 6 in mehrere Ausstellstellungen über die Schwenklagerungen 7, 8 gebracht werden. Die beiden Schwenklagerungen 7 und 8 sind im wesentlichen übereinstimmend ausgebildet, so daß nur eine, nämlich die mit 7 bezeichnete, näher erläutert zu werden braucht. Die Schwenklagerung 7 umfaßt einen am Deckel 6 befestigten Lagerbock 9, welcher in zugeordnete Ausnehmungen 10 im Rahmen 4 einführbar ist. Die freien Enden des Lagerbocks 9 haben Öffnungen 11, durch die jeweils ein Stift bzw. ein Lagerbolzen 12 geht, so daß der Deckel 6 um den Lagerbolzen oder die Lagerbolzen 12 im Zusammenwirken mit dem Lagerbock 9 schwenkbar gelagert ist.

Bei der dargestellten Ausführungsform hat die Schwenklagerung 7 zwei Lagerbolzen 12, welche jeweils eine Vertiefung 13 haben.

Zur Notentriegelung und zur Freigabe einer Notausstiegsluke ist eine Notentriegelungseinrichtung vorgesehen, welche insgesamt mit 14 bezeichnet ist. Die Notentriegelungseinrichtung 14 hat einen L-förmigen Hebel 15, der um eine etwa horizontale Achse 16 drehbar am Rahmen 4 gelagert ist. Dieser L-förmige Hebel 15 bildet bei dieser Notentriegelungseinrichtung 14 die Betätigungshandhabe. Ferner trägt der Hebel 15 im Bereich seiner horizontalen Achse 16 eine Nockeneinrichtung 17, welche drehfest mit dem Hebel 15 verbunden ist. Die Nockeneinrichtung 17 weist eine Nocke 18 auf, welche in die Vertiefung 13 des jeweiligen Lagerbolzens eingreift, um diesen so zu bewegen, daß er aus der Öffnung 11 herausbewegbar ist, um den Deckel 6 mit dem Lagerbock 9 freizugeben.

Insbesondere unter Bezugnahme auf die Fig. 2a und 2b sind die Ausbildungseinzelheiten der Nocke 18 und das Zusammenarbeiten mit der Vertiefung 13 am Lagerbolzen 12 verdeutlicht. Die Nocke 18 ist insbesondere, wie aus Fig. 2b zu ersehen ist, derart profiliert, daß sie in ihrem einen Ende eine Anlaufschräge 19 hat, um ein gleichmäßiges Eintreten in die Vertiefung 13 zu ermöglichen. Das Profil der Nocke 18 ist derart gewählt, daß es sich in axialer Richtung zu dem Umfang der Nocke 18 zum gegenüberliegenden Außenrand erstreckt, so daß zwischen den beiden Enden der flügelförmig ausgestalteten Nocke 18 unter Mitnahme des Lagerbolzens 12 eine Längsbewegung desselben um einen vorbestimmten Weg erzielt wird, der ausreicht, daß der Lagerbolzen 12 von der Öffnung 11 an den Enden des Lagerbocks 9 frei kommt.

Nachstehend wird die Arbeitsweise dieser Notentriegelungseinrichtung 14 näher erläutert. In der Grundstellung, welche in der Figur nicht dargestellt ist, gehen die Lagerbolzen 12 der Schwenklagerungen 7, 8 durch die Öffnungen 11 des Lagerbocks 9, der fest mit dem Deckel 6 verbunden ist. In dieser Grundstellung ist der Deckel 6 in die verschiedenen Ausstellstellungen auf an sich bekannte Weise verstellbar um den Fahrzeuginnenraum zu be- und entlüften. Wenn nun im Notfall die Dachausstiegsluke bzw. die vom Rahmen 4 des Fahrzeugdachs 1 begrenzte Öffnung vollständig freigegeben werden soll, wird der Hebel 15 an seinem jeweiligen Hebelende entweder von innen oder von außen mit einer Zugkraft beaufschlagt, wie dies mit Pfeilen angedeutet ist. Zur Innenbetätigung ist der Hebel 15 in Form einer Griffschale 20 ausgelegt, während zur Außenbetätigung ein Griffteil 21 am anderen Ende des Hebels 15 vorgesehen ist, das über die Dachgrundfläche vorsteht. Dieses Griffteil 21 ist so beschaffen, daß man mit einem oder mehreren Fingern durch das Griffteil 21 durchgreifen kann und dann eine Zugkraft auf den Hebel 15 ausüben kann.

Bei jeder der vorstehend beschriebenen Betätigungsweisen und Beaufschlagungsweisen der Notentriegelungseinrichtung 14 wird der Hebel 15 durch die Einwirkung der Zugkraft entweder von außen oder von innen um seine horizontale Achse 16 gedreht, und die Nocke 18 der Nockeneinrichtung 17 greift bei dieser Drehbewegung in die jeweilige Vertiefung 13 des Lagerbolzens 12 ein und nimmt diesen während einer Drehbewegung der Nocke 18 um einen Winkelbereich von etwa 45° in linearer Richtung mit, so daß der Lagerbolzen 12 aus der Öffnung 11 des Lagerbocks 9 freikommt.

Wie bereits voranstehend erläutert worden ist, ist die gegenüberliegende, weitere Schwenklagerung 8 übereinstimmend mit der Schwenklagerung 7 ausgelegt. Allerdings ist dieser keine gesonderte Notentriegelungseinrichtung zugeordnet, sondern die Bewegung des Lagerbolzens 12 wird über eine Zugeinrichtung 22, welche in Form von zwei Bowdenzugteilen 23 ausgebildet ist, auf einen der jeweils gegenüberliegenden Lagerbolzen 12 übertragen, so daß dieser unmittelbar bei der Bewegung des Lagerbolzens 12 der Schwenklagerung 7 mitgenommen wird und ebenfalls aus den zugeordneten Öffnungen 11 des anderen Lagerbocks 9 der Schwenklagerung 8 herausgezogen wird. Wie aus Fig. 1 zu ersehen ist, umfaßt die Mitnahmeeinrichtung in Form der Zugeinrichtung 22 zwei Bowdenzugteile 23, so daß jeweils zwei gegenüberliegende Lagerbolzen der gegenüberliegenden Schwenklagerungen 7, 8 unmittelbar über ein Bowdenzugteil 23 miteinander bewegungsverbunden sind. Somit werden bei der erfindungsgemäßen Notentriegelungseinrichtung 14 alle Lagerbolzen 12 beider Schwenklagerungen 7,8 im wesentlichen gleichzeitig aus den zugeordneten Öffnungen 11 ausgerückt, so daß der Deckel 6 mit den daran angebrachten Lagerböcken 9 schnell und zuverlässig vom Rahmen 4 getrennt werden kann.

Natürlich kann anstelle der dargestellten Ausführungsform auch eine solche Zugeinrichtung 22 oder eine andere Mitnahmeeinrichtung vorgesehen werden, bei denen beispielsweise nur ein Zugelement oder Bewegungsübertragungselement für die jeweils gegenüberliegende Schwenklagerung 8 vorgesehen ist.

In Fig. 3 ist schematisch in einer Ausschnittsansicht eine Diebstahlsicherung 24 verdeutlicht. Die Diebstahlsicherung 24 wird von einer zusätzlichen Verriegelungseinrichtung 25 gebildet, welche am Rahmen 4 verschiebbar oder drehbar gelagert ist. Ein Verriegelungselement 26 ist in zwei Raststellungen am Rahmen 4 bringbar. Das Kopfende des Verriegelungselements 26 ist derart gestaltet, daß es in der in Fig.3 gezeigten Verriegelungsstellung einen Teil des L-förmigen Hebels 25 hintergreift, so daß dieser in seiner unbetätigten Grundstellung zuverlässig gesichert und gehalten ist. Wenn das Verriegelungselement 26 in Richtung des Pfeils in Fig.3 bewegt wird, kommt das Kopfende desselben von dem Hebel 15 frei, und die Notentriegelungseinrichtung 14 kann wie voranstehend erläutert zur Freigabe einer Notausstiegsluke ausgelöst werden.

Obgleich nicht näher dargestellt ist, kann die als Diebstahlsicherung dienende, zusätzliche Verriegelungseinrichtung 25 mit einer Zentralverriegelungsanlage des Fahrzeugs gekoppelt werden, so daß das Verriegelungselement 26 automatisch beim Abschließen des Fahrzeugs in seine Verriegelungsstellung gemäß Fig. 3 gebracht und beim Fahren des Fahrzeugs in der entriegelten Stellung ist, um ohne zusätzliche Handgriffe die Notentriegelungseinrichtung 14 schnell in Betrieb nehmen zu können.

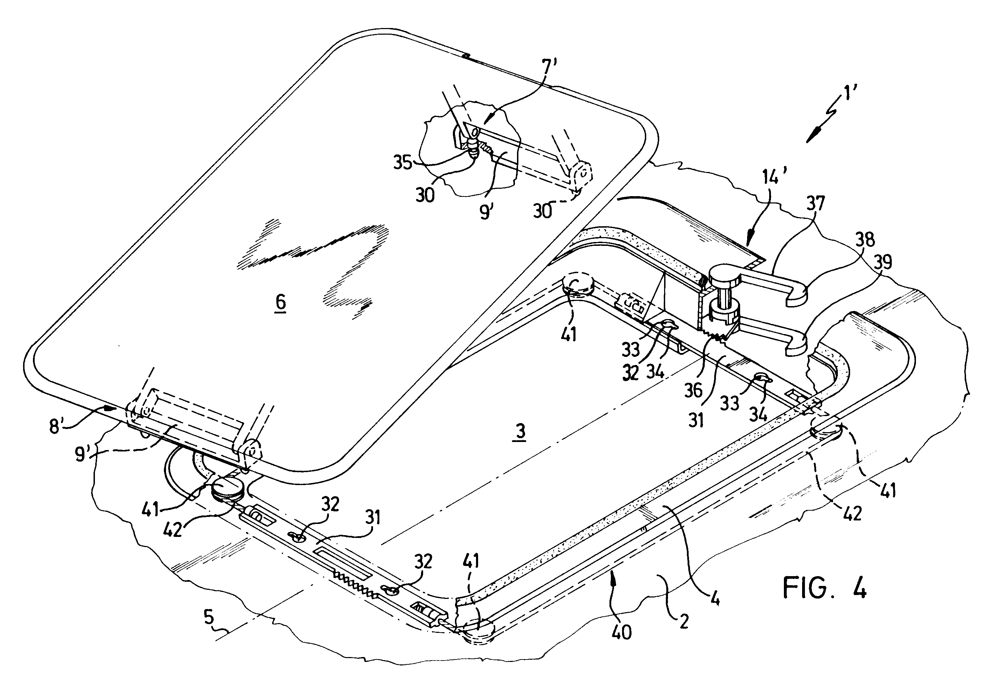

In Fig. 4 ist eine zweite Ausführungsform eines Fahrzeugdachs nach der Erfindung gezeigt, das insgesamt mit 1' bezeichnet ist. Da gleiche oder ähnliche Teile wie bei der voranstehenden Ausführungsform mit denselben Bezugszeichen versehen sind, kann eine nähere Erläuterung desselben entfallen. Bei dem Fahrzeugdach 1' wird die Schwenklagerung 7', 8' mit der Ausstelleinrichtung vom Rahmen 4 getrennt. Jede Schwenklagerung 7', 8' hat einen Lagerbock 9'. Jeder Lagerbock 9' trägt zwei vorspringende Rastzapfen 30, welche in einen Halter 31 und dort vorgesehenen Aufnahmeöffnungen 32 eingreifen können. Jede Aufnahmeöffnung 32 des Halters 31 ist hierbei derart gestaltet, daß sie ein Teil 33 und ein Teil 34 hat. Das Teil 33 der Aufnahmeöffnung 32 hat einen Durchmesser, der etwa dem Außendurchmesser des Rastzapfens 30 entspricht. Das Teil 34 hat einen kleineren Durchmesser, so daß eine am jeweiligen Rastzapfen 30 vorgesehene, vertiefte Umfangsnut 35 paßt. In der Festlegstellung von Lagerbock 9' und Halter 31 über die Rastzapfen 30 greift dieses Teil 34 der Aufnahmeöffnung 32 in die Umfangsnut 35 des Rastzapfens 30 ein, so daß der Lagerbock am Halter 31 zuverlässig festgelegt ist.

Als Notentriegelungseinrichtung 14' ist bei der Ausführungsform nach Fig. 4 der Halter 31 linear beweglich im Rahmen 4 geführt. Ferner trägt der Halter 31 eine Verzahnung 36, welche mit einer entsprechenden Verzahnung an einer Betätigungshandhabe 37 der Notentriegelungseinrichtung 14' zusammenarbeitet. Die Betätigungshandhabe 37 ist um eine etwa senkrecht zur Fahrzeuglängsachse verlaufende Achse drehbar und umfaßt ein Griffteil 38 für die Außenbetätigung und ein Griffteil 39 für die Innenbetätigung. Der Halter 31 ist über eine Mitnahmeeinrichtung 40 mit dem Halter jeweils gegenüberliegenden Schwenklagerung 8' bewegungsverbunden. Als Mitnahmeeinrichtung ist ein um Umlenkrollen 41 im Rahmen 4 geführtes Zugseil 42 vorgesehen.

Nachstehend wird die Arbeitsweise dieser Notentriegelungseinrichtung 14' näher erläutert. Beim Verdrehen des Griffteils 38 oder 39 der Betätigungshandhabe 37 wird über die Verzahnung 36 von Betätigungshandhabe 37 und Halter 31 der Halter 31 linear derart verschoben, daß der Teil 33 der Aufnahmeöffnungen 32 zum Rastzapfen 30 fluchtet, und der Lagerbock 9' zusammen mit dem Deckel 6 vom Halter 31 gelöst werden kann. Über das Zugseil 42 wird zugleich auch der entsprechende Halter 31 der gegenüberliegenden Schwenklagerung 8' mitgenommen und auch der dieser Schwenklagerung zugeordnete Lagerbock kommt von dem zugeordneten Halter 31 frei, so daß beide Schwenklagerungen 7', 8' gelöst sind und der Deckel 6 vom Rahmen 4 abgenommen werden kann. Nunmehr ist die Notausstiegsluke begrenzt durch die Innenöffnung des Rahmens 4 freigelegt.

Obgleich nicht dargestellt ist, können auch dieser Ausführungsform und der Notentriegelungseinrichtung 14' entsprechende Diebstahlsicherungen mit zusätzlichen Verriegelungseinrichtungen zugeordnet werden, welche als Beispiele voranstehend erläutert wurden.

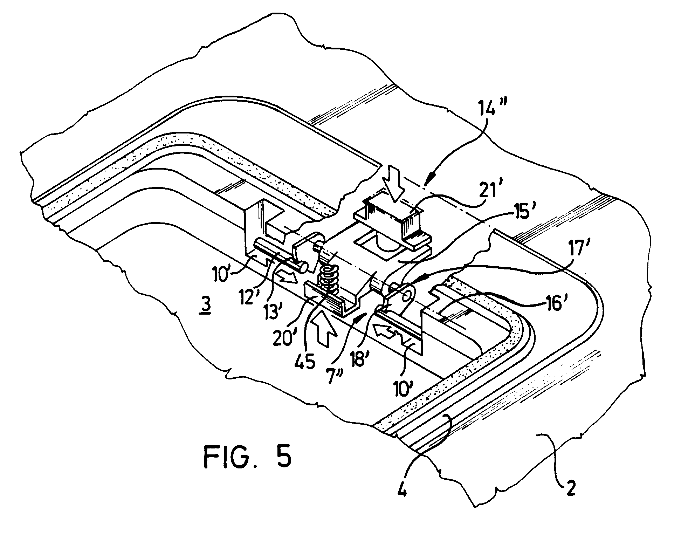

In Fig. 5 ist schematisch eine Ausführungsvariante einer Notentriegelungseinrichtung 14'' verdeutlicht. Der wesentliche Unterschied zu der Notentriegelungseinrichtung 14, welche anhand von Fig. 1 verdeutlicht ist, ist darin zu sehen, daß die Notentriegelungseinrichtung 14'' mit einer Druckkraftbeaufschlagung auslösbar ist. Ähnlich wie in Fig.1 ist ein L-förmiger Hebel 15' vorgesehen, der in seine in Fig. 5 gezeigte Grundstellung mittels einer Feder 45 gehalten ist. Als Nockeneinrichtung 17' ist eine flügelförmige Nocke 18' auf jeder Seite im Bereich der Hebeldrehachse 16' vorgesehen, welche mit entsprechenden Vertiefungen 13' der Lagerbolzen 12' der Schwenklagerung 7'' zusammenarbeiten. Wie mit den Pfeilen angedeutet ist, wird bei einer Beaufschlagung des innenliegenden Griffteils 20' der Notentriegelungseinrichtung 14'' oder bei einer Druckkraftbeaufschlagung des außen liegenden Beaufschlagungsteils 21' der Hebel 15' um seine horizontale Achse 16' verschwenkt, und die Lagerbolzen 12' werden aus den Ausnehmungen 10' und den entsprechenden Öffnungen im nicht dargestellten Lagerbock ausgerückt. Der nicht näher dargestellte Deckel der fest mit diesem verbundene Lagerbock kann dann in der Lösestellung der Notentriegelungseinrichtung 14'' vom Rahmen 4 getrennt und gelöst werden.

Selbstverständlich ist die Erfindung nicht auf die voranstehend beschriebenen und erläuterten Einzelheiten beschränkt, sondern es sind zahlreiche Abänderungen und Modifikationen möglich, die der Fachmann im Bedarfsfall treffen wird, ohne den Erfindungsgedanken zu verlassen. Auch sind beispielsweise Kombinationen von Notentriegelungseinrichtungen möglich, welche einerseits mit einer Druckkraft und beispielsweise von außen mit einer Zugkraft beaufschlagbar sind, um in ihre Lösestellung gebracht zu werden. Auch können andere Mitnahmeeinrichtungen als die dargestellten Zugeinrichtungen vorgesehen werden. Dies hängt von den jeweils gewünschten Erfordernissen und den Gegebenheiten des Fahrzeugdaches ab, welche wiederum von der Art des Fahrzeugs abhängig sind.

### Bezugszeichen

- 1: Fahrzeugdach insgesamt
- 1': Fahrzeugdach insgesamt in Fig. 4
- 2: Feste Dachfläche
- 3: Dachöffnung
- 4: Rahmen
- 5: Fahrzeuglängsachse
- 6: Deckel
- 7,7',7'': Schwenklagerung
- 8,8': Schwenklagerung
- 9,9': Lagerbock
- 10,10': Ausnehmungen
- 11: Öffnungen
- 12,12': Stift bzw. Lagerbolzen
- 13,13': Vertiefung
- 14,14',14'': Notentriegelungseinrichtung insgesamt
- 15,15': L-förmiger Hebel
- 16,16': Horizontale Achse
- 17,17': Nockeneinrichtung
- 18,18': Nocke
- 19: Anlaufschräge
- 20,20': Griffschale
- 21,21': Griffteil
- 22: Zugeinrichtung
- 23: Bowdenzugteil
- 24: Diebstahlsicherung insgesamt
- 25: Zusätzliche Verriegelungseinrichtung
- 26: Verriegelungselement
- 30: Rastzapfen
- 31: Halter
- 32: Aufnahmeöffnungen
- 33: Teil etwa entsprechend dem Außendurchmesser von 30
- 34: Weiteres Teil der Aufnahmeöffnung 32
- 35: Vertiefte Umfangsnut
- 36: Verzahnung
- 37: Betätigungshebel
- 38: Griffteil oben
- 39: Griffteil unten
- 40: Mitnahmeeinrichtung
- 41: Umlenkrollen
- 42: Zugseil
- 45: Feder

## Patentansprüche

1. Fahrzeugdach (1, 1'), insbesondere für Schwerkraftfahrzeuge, Busse o.dgl. mit einer in einer festen Dachfläche (2) vorgesehenen Dachöffnung (3), die mittels eines Deckels (6) verschließbar ist, der um zwei quer zur Fahrzeuglängsachse (5) verlaufende Achsen über eine Schwenklagerung (7, 8; 7', 8'; 7'') und eine Ausstelleinrichtung bezüglich eines in die Dachöffnung eingesetzten Rahmens (4) ausstellbar ist, und mit einer Notentriegelungseinrichtung (14, 14', 14''), welche zur Bildung einer Notausstiegsluke eine Trennung von Deckel (6) und fahrzeugfestem Rahmen (4) erlaubt, dadurch **gekennzeichnet,** daß die Notentriegelungseinrichtung (14, 14', 14'') den Deckel (6) von dem Rahmen (4) im Bereich beider Schwenklagerungen (7, 8; 7', 8'; 7'') über eine gemeinsame Betätigungseinrichtung (15, 15', 33, 34) trennt, welche vom Fahrzeuginnenraum oder von außen betätigbar ist.

2. Fahrzeugdach nach Anspruch 1, dadurch gekennzeichnet, daß die Notentriegelungseinrichtung (14, 14', 14'') in der Nähe einer der Schwenklagerungen (7, 7', 7'') angeordnet ist und die Trennung an der jeweils anderen Schwenklagerung (8, 8') über eine im Rahmen (4) geführte Mitnahmeeinrichtung (22, 23, 40) erfolgt.

3. Fahrzeugdach nach Anspruch 2, dadurch gekennzeichnet, daß die Mitnahmeeinrichtung (22, 23, 40) von einem Seilzug (42) oder dergleichen gebildet wird.

4. Fahrzeugdach nach Anspruch 2, dadurch gekennzeichnet, daß die Mitnahmeeinrichtung von einem Bowdenzug (23) gebildet wird.

5. Fahrzeugdach nach einem der vorangehenden Ansprüche, dadurch gekennzeichnet, daß der Betätigungshandhabe (15, 15'; 37) für die Außenbetätigung der gemeinsamen Betätigungseinrichtung eine Diebstahlsicherung (24) zugeordnet ist.

6. Fahrzeugdach nach Anspruch 5, dadurch gekennzeichnet, daß die Diebstahlsicherung (24) von einer zusätzlichen Verriegelungseinrichtung (25) gebildet wird.

7. Fahrzeugdach nach Anspruch 6, dadurch gekennzeichnet, daß die zur Diebstahlsicherung (24) dienende Verriegelungseinrichtung (25) mit einer Zentralverriegelungsanlage koppelbar ist.

8. Fahrzeugdach nach einem der vorangehenden Ansprüche, dadurch gekennzeichnet, daß die Notentriegelungseinrichtung (14') die Schwenklagerung mit der Ausstelleinrichtung vom Rahmen (4) trennt.

9. Fahrzeugdach nach Anspruch 8, dadurch gekennzeichnet, daß der zur Schwenklagerung dienende Lagerbock (9') an einem linear im Rahmen (4) verschieblich geführten Halter (31) lösbar festlegbar ist.

10. Fahrzeugdach nach Anspruch 9, dadurch gekennzeichnet, daß zum lösbaren Festlegen am Lagerbock (9') vorstehende Rastzapfen (30) in Aufnahmeöffnungen (32) des Halters (31) eingreifen.

11. Fahrzeugdach nach Anspruch 10, dadurch gekennzeichnet, daß jede Aufnahmeöffnung (32) ein durchmessergroßes, etwa dem Außendurchmesser des Rastzapfens (30) entsprechendes Teil (33) und ein durchmesserkleineres Teil (34) umfaßt, in das eine am jeweiligen Rastvorsprung (30) vorgesehene, vertiefte Umfangsnut (35) in der Festlegestellung eingreift.

12. Fahrzeugdach nach einem der Ansprüche 8 bis 11, dadurch gekennzeichnet, daß die Notentriegelungseinrichtung (14') einen von außen oder innen beaufschlagbaren Betätigungshebel (37) aufweist, der ein Zahnsegment (36) trägt, welches in eine Verzahnung am Halter (31) derart eingreift, daß eine Drehbewegung des Betätigungshebels (37) den Halter (31) in Längsrichtung in seine Lösestellung verfährt.

13. Fahrzeugdach nach Anspruch 12, dadurch gekennzeichnet, daß der Halter (31) der jeweils anderen Schwenklagerung (8') über ein um Umlenkrollen (41) im Rahmen (4) geführtes Zugseil (42) mitgenommen wird.

14. Fahrzeugdach nach einem der Ansprüche 1 bis 7, dadurch gekennzeichnet, daß die Notentriegelungseinrichtung (14) die Schwenklagerungen (7, 8) am Rahmen (4) trennt.

15. Fahrzeugdach nach Anspruch 14, dadurch gekennzeichnet, daß die Notentriegelungseinrichtung (14, 14') zwei jeder Schwenklagerung (7, 8, 7'') zugeordnete Stifte (12, 12') hat, welche mittels einer gemeinsamen Betätigungshandhabe (15, 15') in eine Entriegelungsstellung bringbar sind.

16. Fahrzeugdach nach Anspruch 15, dadurch gekennzeichnet, daß die Betätigungshandhabe einen L-förmig ausgebildeten und um eine etwa horizontale Achse (16, 16') schwenkbaren Hebel (15, 15') umfaßt, an dem mit den einer Schwenklagerung (7, 8, 7'') zugeordneten Stiften (12, 12') zusammenarbeitende Nockeneinrichtungen (17, 17') angeordnet sind.

17. Fahrzeugdach nach Anspruch 16, dadurch gekennzeichnet, daß die Stifte (12, 12') durch die Nockeneinrichtungen (17, 17') unter Ausführung einer Längsverschiebung in die Entriegelungsstellung bewegbar sind.

18. Fahrzeugdach nach einem der Ansprüche 14 bis 17, dadurch gekennzeichnet, daß die Stifte (12, 12') die von der Betätigungshandhabe (15, 15') beaufschlagbar sind, über einen Zug (22) mit den jeweils beiden, der anderen Schwenklagerung (8) zugeordneten Stiften bewegungsverbunden sind.

19. Fahrzeugdach nach Anspruch 18, dadurch gekennzeichnet, daß jeder über die Betätigungshandhabe beaufschlagbare Stift (12, 12') über ein gesondertes Zugelement (23) mit dem jeweils gegenüberliegenden Stift (12, 12') der anderen Schwenklagerung (8) bewegungsverbunden ist.

20. Fahrzeugdach nach einem der Ansprüche 16 bis 19, dadurch gekennzeichnet, daß die Nockeneinrichtung (17, 17') eine in eine Vertiefung (13, 13') des jeweiligen Stifts (12, 12') eingreifende Nocke (18, 18') hat.

21. Fahrzeugdach nach Anspruch 20, dadurch gekennzeichnet, daß die Nocke (18) derart profiliert ist, daß sie eine Anlaufschräge (19) an der Eingriffsseite in die Vertiefung (13) hat und sich in axialer Richtung über den Umfang zum gegenüberliegenden Außenrand erstreckt.

22. Fahrzeugdach nach Anspruch 21, dadurch gekennzeichnet, daß die Nocke (18, 18') flügelförmig ausgebildet ist und sich über einen Winkelbereich von etwa 45° erstreckt.

23. Fahrzeugdach nach einem der Ansprüche 16 bis 22, dadurch gekennzeichnet, daß ein Hebelende der Betätigungshandhabe (15, 15') bei Innenbetätigung und das andere bei Außenbetätigung beaufschlagt wird.

24. Fahrzeugdach nach Anspruch 23, dadurch gekennzeichnet, daß der Hebel (15) zur Innenbetätigung oder Außenbetätigung durch eine Zugkraft beaufschlagbar ist.

25. Fahrzeugdach nach Anspruch 23, dadurch gekennzeichnet, daß der Hebel (15') zur Innenbetätigung oder Außenbetätigung durch eine Druckkraft beaufschlagbar ist.

26. Fahrzeugdach nach einem der Ansprüche 15 bis 24, dadurch gekennzeichnet, daß die der Schwenklagerung (7, 8, 7'') zugeordneten Stifte (12, 12') die Lagerbolzen der Schwenklagerung (7, 8; 7'') am Rahmen (4) sind.

## Claims

1. A vehicle roof (1, 1'), particularly for heavy motor vehicles, buses or the like, with a roof opening (3) provided in a fixed roof area (2) and which can be closed by means of a cover (6) which can be extended into an open position about two axes extending crosswise to the longitudinal axis (5) of the vehicle via a pivot mounting (7, 8; 7', 8'; 7'') and a push-out means, the said opening function being relative to a frame (4) inserted into the roof opening, and with an emergency release device (14, 14', 14'') which, in order to provide an emergency exit, allows a separation of the cover (6) from the frame (4) which is rigid with the vehicle, characterised in that the emergency release device (14, 14', 14'') separates the cover (6) from the frame (4) in the region of the two pivot mountings (7, 8; 7', 8'; 7'') via a common actuating device (15, 15', 33, 34), which can be actuated from inside or outside the vehicle.

2. A vehicle roof according to Claim 1, characterised in that the emergency release device (14, 14', 14'') is disposed in the vicinity of one of the pivot mountings (7, 7', 7'') and in that separation takes place at whichever is the other pivot mounting (8, 8') via an entraining means (22, 23, 40) guided in the frame (4).

3. A vehicle roof according to Claim 2, characterised in that the entraining device (22, 23, 40) consists of a cable (42) or the like.

4. A vehicle roof according to Claim 2, characterised in that the entraining device consists of a Bowden control (23).

5. A vehicle roof according to one of the preceding Claims, characterised in that an anti-theft device (24) is associated with the actuating handle (15, 15', 37) for external actuation of the joint actuating device.

6. A vehicle roof according to Claim 5, characterised in that the anti-theft device (24) consists of an additional locking device (25).

7. A vehicle roof according to Claim 6, characterised in that the locking device (25) which serves to provide an anti-theft device (24) can be coupled to a central locking system.

8. A vehicle roof according to one of the preceding Claims, characterised in that the emergency release device (14') separates the pivot mounting and push-out device from the frame (4).

9. A vehicle roof according to Claim 8, characterised in that the bearing block (9') which provides the pivot mounting can be separably mounted on a support (31) guided for linear displacement in the frame (4).

10. A vehicle roof according to Claim 9, characterised in that projecting studs (30) on the bearing block (9') engage receiving apertures (32) in the holder (31) to achieve said separable mounting.

11. A vehicle roof according to Claim 10, characterised in that each receiving aperture (32) comprises a large diameter part (33) corresponding substantially to the outside diameter of the studs (30) and a smaller diameter part (34) which, in the fixed position, is engaged by a peripheral groove (35) provided on the respective projecting stud (30).

12. A vehicle roof according to one of Claims 8 to 11, characterised in that the emergency release device (14') has an actuating lever (37) which can be operated from outside or inside and which carries a toothed segment (36) which so engages teeth on the holder (31) that a rotary movement of the actuating lever (37) propels the holder (31) in a longitudinal direction and into its released position.

13. A vehicle roof according to Claim 12, characterised in that the holder (31) of whichever is the other pivot mounting (8') is entrained via a traction cable (42) guided around deflecting rollers (41) in the frame (4).

14. A vehicle roof according to one of Claims 1 to 7, characterised in that the emergency release device (14) separates the pivot mountings (7, 8) on the frame (4).

15. A vehicle roof according to Claim 14, characterised in that the emergency release device (14, 14') has two pegs (12, 12') associated with each pivot mounting (7, 8, 7'') and which can be brought into a released position by a common actuating handle (15, 15').

16. A vehicle roof according to Claim 15, characterised in that the actuating handle comprises an L-shaped lever (15, 15') adapted to pivot about a substantially horizontal axis (16, 16') and on which there are cam means (17, 17') cooperating with the pegs (12, 12') associated with a pivot mounting (7, 8, 7'').

17. A vehicle roof according to Claim 16, characterised in that the pegs (12, 12') can be moved by the cam means (17, 17') to perform a longitudinal displacement into the released position.

18. A vehicle roof according to one of Claims 14 to 17, characterised in that the pegs (12, 12') which can be acted upon by the actuating handle (15, 15') are motionally connected by a cable (22) with whichever are the two pegs associated with the other pivot mounting (8).

19. A vehicle roof according to Claim 18, characterised in that each peg (12, 12') which can be acted upon by the actuating handle is motionally connected by a separate traction element (23) with whichever is the oppositely disposed peg (12, 12') of the other pivot mounting (8).

20. A vehicle roof according to one of Claims 16 to 19, characterised in that the cam means (17, 17') has a cam (18, 18') engaging a depression (13, 13') in the respective peg (12, 12').

21. A vehicle roof according to Claim 20, characterised in that the cam (18) is of a profile such that it has a run-on ramp (19) on the side intended to engage the depression (13) and extends in an axial direction over the periphery to the oppositely disposed outer edge.

22. A vehicle roof according to Claim 21, characterised in that the cam (18, 18') is wing-shaped and extends over an angular range of about 45°.

23. A vehicle roof according to one of Claims 16 to 22, characterised in that one end of the actuating handle (15, 15') is acted upon during internal operation while the other is acted upon during external operation.

24. A vehicle roof according to Claim 23, characterised in that the lever (15) for internal or external actuation can be acted upon by a tractive force.

25. A vehicle roof according to Claim 23, characterised in that the lever (15') for internal or external actuation can be acted upon by a pressure force.

26. A vehicle roof according to one of Claims 15 to 24, characterised in that the pegs (12, 12') associated with the pivot mounting (7, 8, 8'') are the bearing pins of the pivot mounting (7, 8, 7'') on the frame (4).

## Revendications

1. Toit de véhicule (1, 1'), notamment pour des camions, des autobus ou des véhicules analogues avec l'ouverture de toit (3) prévue dans une surface de toit fixe (2), ouverture qui peut être fermée au moyen d'un couvercle (6) lequel peut être relevé autour de deux axes s'étendant transversalement par rapport à l'axe longitudinal (5) du véhicule, par l'intermédiaire d'un montage de pivotement (7,8 ; 7', 8' ; 7'') et d'un dispositif de relevage, par rapport à un cadre (4) mis en place dans l'ouverture du toit, et avec un dispositif de déverrouillage d'urgence (14, 14', 14'') qui pour former une lucarne de sortie d'urgence permet une séparation du couvercle (6) et du cadre (4) solidaire du véhicule, toit de véhicule caractérisé en ce que le dispositif de déverrouillage d'urgence (14, 14', 14'') sépare de couvercle ( 6) du cadre (4) au voisinage de deux montages de pivotement (7,8 ; 7', 8' ; 7'') par l'intermédiaire d'un dispositif d'actionnement commun (15, 15'', 33, 34), qui est susceptible d'être actionné à partir de l'intérieur du véhicule ou bien de l'extérieur.

2. Toit de véhicule selon la revendication 1 caractérisé en ce que le dispositif de déverrouillage d'urgence (14, 14', 14'') est disposé au voisinage d'un des montages de pivotement (7, 7', 7'') et la séparation à l'autre montage de pivotement respectif (8, 8') s'effectue par l'intermédiaire d'un dispositif d'entraînement (22, 23, 40) guidé dans le cadre (4).

3. Toit de véhicule selon la revendication 2 caractérisé en ce que le dispositif d'entraînement (22, 23, 40) est constitué par un câble de traction(42) ou analogue.

4. Toit de véhicule selon la revendication 2 caractérisé en ce que le dispositif d'entraînement est constitué par un câble Bowden (23).

5. Toit de véhicule selon une des précédentes revendications caractérisé en ce que à la manette d'actionnement (15, 15' ; 37) pour l'actionnement externe du dispositif d'actionnement commun est associé un dispositif antivol (24).

6. Toit de véhicule selon la revendication 5 caractérisé en ce que le dispositif antivol (24) est formé par un dispositif de verrouillage (25) supplémentaire.

7. Toit de véhicule selon la revendication 6 caractérisé en ce que le dispositif de verrouillage (25) utilisé pour le dispositif antivol (24) est susceptible d'être couplé à une installation de verrouillage central.

8. Toit de véhicule selon une des précédentes revendications caractérisé en ce que le dispositif de déverrouillage d'urgence (14') sépare du cadre (4) le montage de pivotement du dispositif de relevage.

9. Toit de véhicule selon la revendication 8 caractérisé en ce que le support (9') servant au montage de pivotement est susceptible d'être fixé de façon amovible sur un appui (31) guidé de façon à pouvoir se déplacer linéairement sur le cadre (4).

10. Toit de véhicule selon la revendication 9 caractérisé en ce que pour la fixation amovible sur le support (9') des tenons d'arrêt (30) en saillie viennent en prise dans des ouvertures de réception (32) de l'appui (31).

11. Toit de véhicule selon la revendication 10 caractérisé en ce que chaque ouverture de réception (32) comprend une partie (33) de grand diamètre correspondant à peu près au diamètre externe du tenon d'arrêt (30), et une partie (34) de petit diamètre, dans laquelle vient en prise dans la position de fixation une gorge périphérique (35) prévue en profondeur sur le tenon d'arrêt (30) correspondant.

12. Toit de véhicule selon une des revendications 8 à 11 caractérisé en ce que le dispositif de déverrouillage d'urgence (14') comporte un levier d'actionnement (37) accessible de l'extérieur ou de l'intérieur qui porte un segment denté (36) lequel vient en prise dans une denture sur l'appui (31) de sorte qu'un mouvement de rotation du levier d'actionnement (37) déplace l'appui (31) en direction longitudinale dans sa position de déclenchement.

13. Toit de véhicule selon la revendication 12 caractérisé en ce que l'appui (31) de l'autre montage de pivotement respectif (8') est entraîné par l'intermédiaire d'un câble tracteur (42) guidé sur des poulies de renvoi (41) dans le cadre (4).

14. Toit de véhicule selon une des revendications 1 à 7 caractérisé en ce que le dispositif de déverrouillage d'urgence (14) sépare les montages de pivotement (7, 8) sur le cadre (4).

15. Toit de véhicule selon la revendication 14 caractérisé en ce que le dispositif de déverrouillage d'urgence (14, 14') a deux broches (12, 12') associées à chaque montage de pivotement (7, 8, 7''), qui peuvent être amenées dans une position de déverrouillage au moyen d'une manette d'actionnement commune (15, 15').

16. Toit de véhicule selon la revendication 15 caractérisé en ce que la manette d'actionnement comprend un levier (15, 15') réalisé en forme de L et susceptible de pivoter autour d'un axe à peu près horizontal (16, 16'), levier sur lequel sont disposés des dispositifs de came (17, 17') coopérant avec les broches (12, 12') associées à un montage de pivotement (7, 8, 7'').

17. Toit de véhicule selon la revendication 16 caractérisé en ce que les broches (12, 12') sont susceptibles d'être déplacées par les dispositifs de came (17, 17') pour effectuer un déplacement longitudinal dans la position de déverrouillage.

18. Toit de véhicule selon une des revendications 14 à 17 caractérisé en ce que les broches (12, 12') qui sont susceptibles d'être commandées par la manette d'actionnement (15, 15'), sont solidaires en déplacement par l'intermédiaire d'un dispositif de traction (22) respectivement des deux broches associées à l'autre montage de pivotement (8).

19. Toit de véhicule selon la revendication 18 caractérisé en ce que chaque broche (12, 12') susceptible d'être commandée par l'intermédiaire de la manette d'actionnement est solidaire en déplacement par l'intermédiaire d'un élément de traction (23) distinct de la broche respectivement placée en face (12, 12') de l'autre montage de pivotement (8).

20. Toit de véhicule selon une des revendications 16 à 19 caractérisé en ce que le dispositif de came (17, 17') a une came (18, 18') venant en prise dans une cavité ( 13, 13') de la broche correspondante (12, 12').

21. Toit de véhicule selon la revendication 20 caractérisé en ce que la came (18) est profilée de façon qu'elle a une rampe d'accès (19) sur le côté d'attaque dans la cavité (13) et s'étend en direction axiale sur la périphérie jusque au bord externe opposé.

22. Toit de véhicule selon la revendication 21 caractérisé en ce que la came (18, 18') est réalisée sous forme d'aile et s'étend sur une zone angulaire d'environ 45°.

23. Toit de véhicule selon une des revendications 16 à 22 caractérisé en ce qu'une extrémité de levier de la manette d'actionnement (15, 15') est sollicitée lors de l'actionnement interne et l'autre lors de l'actionnement externe.

24. Toit de véhicule selon la revendication 23 caractérisé en ce que le levier (15) est sollicité pour l'actionnement interne ou l'actionnement externe par un effort de traction.

25. Toit de véhicule selon la revendication 23 caractérisé en ce que le levier (15') pour l'actionnement interne ou pour l'actionnement externe est sollicité par un effort de pression.

26. Toit de véhicule selon une des revendications 15 à 24 caractérisé en ce que les broches (12, 12') associées au montage de pivotement (7, 8, 7'') sont les axes de paliers du montage de pivotement (7, 8 ; 7'') sur le cadre (4).
